# EUROPÄISCHE PATENTANMELDUNG

(11) **EP 4 009 490 A1**
(43) Veröffentlichungstag der Anmeldung: **08.06.2022**
(21) Anmeldenummer: 20211810.5
(22) Anmeldetag: 04.12.2020
(51) Int. Cl.: H02K 1/02, H02K 15/02, H02K 1/22

(54) **MATERIALLAGE, MATERIALLAGENSTAPEL FÜR EINE ELEKTRISCHE MASCHINE UND VERFAHREN ZUR HERSTELLUNG EINER MATERIALLAGE**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft eine Materiallage für eine elektrische Maschine, wobei die Materiallage (2) eine erste Schicht (4) aufweist, die in einer flächigen Ausbreitung ein erstes Material (6) aufweist, an das entlang der flächigen Ausbreitung ein zweites Material (8) angrenzt, wobei die beiden Materialien (6, 8) stoffschlüssig miteinander entlang einer ersten Verbindungsstrecke (10) verbunden sind und das erste Material (6) gegenüber dem zweiten Material (8) eine niedrigere Permeabilitätszahl µ_{τ} aufweist, dadurch gekennzeichnet, dass die Materiallage (2) eine zweite Schicht (12) aufweist, die mit der ersten Schicht (4) stoffschlüssig verbunden ist und diese an einer Flächenseite (14) zumindest teilweise bedeckt und die ebenfalls mindestens zwei Materialien, ein drittes Material (16) und ein viertes Material (18) umfasst, die wiederum entlang einer flächigen Ausbreitung entlang einer zweiten Verbindungsstrecke (20) verbunden sind, wobei der Bereich des dritten Materials (16) oder der Bereich des vierten Materials (18) die erste Verbindungsstrecke (10) zumindest teilweise überlappt.

## Beschreibung

Die Erfindung betrifft eine Materiallage nach dem Oberbegriff des Patentanspruchs 1, einen Materiallagenstapel nach Patentanspruch 11, eine elektrische Maschine nach Patentanspruch 12 sowie ein Verfahren zur Herstellung einer Materiallage nach Patentanspruch 13.

Ein neues Verfahren zur Herstellung von Magnetblechen für Elektromaschinen stellt der Siebdruck bzw. der Schablonendruck dar. Hierbei wird ausgehend von Metallpulvern zunächst eine Druckpaste erzeugt, diese dann mittels einer Sieb- oder Schablonendrucktechnik zu einem Grünkörper im Dickschichtverfahren verarbeitet. Anschließend wird der entstandene Grünkörper durch thermische Behandlung wie z. B. einer Entbinderung und einer Sinterung in ein metallisches strukturiertes blechförmiges Bauteil überführt. Eine derartige Technologie ist beispielsweise aus der WO2020011821 A1 bekannt.

Soll etwa der Rotor oder der Stator einer elektrischen Maschine nun aus mehreren Funktionsgruppen und somit aus mehreren Materialien bestehen, beispielsweise einer nichtmagnetischen Tragstruktur aus Edelstahl und einem weichmagnetischen flussführenden Funktionselement wie beispielsweise einer Legierung aus Eisen und Kobalt, dann besteht die Herausforderung in der Herstellung von mehrkomponentigen Blechen. Insbesondere das Handling der Grünkörper während der Produktion der Blechelemente kann dabei aufgrund ihrer geringen Dicke einen hohen technischen Aufwand erfordern. Üblicherweise werden bei der Herstellung von elektrischen Maschinen eine Vielzahl von derartigen Blechen zu einem Blechpaket zusammengefügt, das anschließend mit einem metallischen Leiter umwickelt wird. Für derartige Blechpakete werden üblicherweise Bleche aus einem Coil herausgestanzt. Derartige Bleche weisen jedoch grundsätzlich über die gesamte Fläche hinweg dieselbe Materialeigenschaft auf, da sie ausschließlich aus einem Material bestehen.

Das bzw. die in dem zitierten Stand der Technik beschriebene(n) Blech(e) dien(t) (en) zwar dem Aufbau eines Blechpaketes in einem Rotor oder in einem Stator einer elektrischen Maschine. Aufgrund der Komposit-Zusammensetzung aus zwei verschiedenen funktionell wirkenden Materialien und aufgrund des Herstellungsverfahrens wird an dieser Stelle nicht von einem Blech gesprochen, sondern es wird in allgemeinerer Form die Bezeichnung Materiallage verwendet.

Der Erfindung liegt die Aufgabe zugrunde, eine Materiallage sowie ein Materiallagenpaket, eine elektrische Maschine und ein Verfahren zur Herstellung einer Materiallage bereitzustellen, die gegenüber dem Stand der Technik einen geringeren Aufwand beim Herstellen der Grünkörper erfordert und dadurch eine kostengünstigere Herstellung erlaubt.

Die Lösung der Aufgabe besteht in einer Materiallage mit den Merkmalen des Patentanspruchs 1, in einem Materiallagenstapel mit den Merkmalen des Patentanspruchs 11, in einer elektrischen Maschine mit den Merkmalen des Patentanspruchs 12 sowie in einem Verfahren zur Herstellung einer Materiallage mit den Merkmalen des Patentanspruchs 13.

Der Anspruch 1 umfasst eine Materiallage für eine elektrische Maschine, wobei die Materiallage eine erste Schicht aufweist, die in einer flächigen Ausbreitung ein erstes Material aufweist, an das entlang der flächigen Ausbreitung ein zweites Material angrenzt. Dabei sind die beiden Materialien stoffschlüssig miteinander entlang einer ersten Verbindungstrecke verbunden. Das erste Material weist gegenüber dem zweiten Material eine niedrigere Permeabilitätszahl µ_{τ} auf. Die Materiallage zeichnet sich dadurch aus, dass eine zweite Schicht vorgesehen ist, die mit der ersten Schicht stoffschlüssig verbunden ist und diese an einer Flächenseite zumindest teilweise bedeckt und die ebenfalls mindestens zwei Materiallagen, nämlich ein drittes und ein viertes Material umfasst. Auch bei der zweiten Schicht ist es so, dass das dritte und das vierte Material entlang einer flächigen Ausbreitung mit einer zweiten Verbindungsstrecke verbunden sind. Die zweite Schicht ist dabei gegenüber der ersten Schicht in der Art positioniert, dass die erste Verbindungsstrecke durch eines der beiden Materialien der zweiten Schicht, also entweder dem dritten Material oder dem vierten Material, zumindest teilweise überlappt ist. Das bedeutet im Umkehrschluss, dass die erste Verbindungsstrecke in der ersten Schicht nicht unterhalb der zweiten Verbindungsstrecke kongruent verläuft. Es liegt eine Überlappung eines der beiden Materialien der zweiten Schicht über der ersten Verbindungsstrecke vor. Die Grenzlinie zwischen dem ersten und dem zweiten Material wird also durch eines der beiden Materialien der zweiten Schicht, also dem dritten und dem vierten Material, überdeckt.

Diese Anordnung dient dazu, dass die erste Verbindungsstrecke durch eine Überlappung der zweiten Schicht verfestigt wird und die Handhabbarkeit der Materiallage, insbesondere im Zustand eines Grünkörpers, also im nicht fertiggestellten Zustand, insbesondere vor einem Wärmebehandlungs- oder Sinterprozess, gegenüber dem Stand der Technik erleichtert wird, was die Produktionskosten reduziert. Allerdings auch im fertigen Zustand weist eine derart hergestellte Materiallage sowohl eine höhere Biegefestigkeit als auch eine höhere Zugfestigkeit gegenüber Materiallagen und Blechen aus dem Stand der Technik auf.

Ebenfalls als Vorteil gegenüber dem Stand der Technik, nämlich der Herstellung von Magnetblechen für Blechpakete, weist die beschriebene Materiallage in ihrer flächigen Ausbreitung unterschiedliche Materialeigenschaften auf. Das erste Material kann dabei mit hohen Festigkeiten ausgestaltet sein und den mechanischen Anforderungen an das endgültige Bauteil genügen, wobei das zweite Material der ersten Schicht den hohen Anforderungen an die magnetischen Eigenschaften der Materiallage gerecht wird. Es handelt sich somit bei der beschriebenen Materiallage um ein gezieltes lokales Design der Werkstoffeigenschaften in einem integralen Bauteil.

Eine weitere vorteilhafte Ausgestaltungsform der Erfindung besteht darin, dass das dritte Material der zweiten Schicht eine niedrigere Permeabilitätszahl µ_{τ} aufweist als das vierte Material, das sich ebenfalls in der zweiten Schicht befindet. Somit kann auch die zweite Schicht mit ähnlich lokal variablen Werkstoffeigenschaften aufwarten wie die erste Schicht. Insbesondere das vierte Material, das wiederum in der zweiten Schicht bevorzugt das zweite Material aus der ersten Schicht bedeckt, weist dabei zumindest ähnlich gute magnetische Eigenschaften mit einer hohen Permeabilitätszahl auf wie dieses. Das heißt, die übereinanderliegenden Materialien der ersten und zweiten Schicht weisen jeweils ähnliche Eigenschaften auf, so ist es wiederum bevorzugt, dass das erste und das dritte Material besonders hohe Festigkeiten aufweisen und das zweite sowie das vierte Material gute magnetische Eigenschaften aufweisen.

In einer weiteren Ausgestaltungsform der Erfindung ist eine dritte Schicht vorgesehen, die ein fünftes Material und ein sechstes Material umfasst. Die dritte Schicht ist auf einer der zweiten Schicht gegenüberliegenden Flächenseite auf der ersten Schicht in analoger Weise zur zweiten Schicht angeordnet. Die dritte Schicht führt dabei zu einer weiteren Stabilisierung der ersten Schicht auf der gegenüberliegenden Seite der zweiten Schicht. Auch die dritte Schicht weist dabei eine dritte Verbindungsstrecke auf und eines der beiden Materialien der dritten Schicht überlappt in analoger Weise die erste Verbindungsstrecke der ersten Schicht, um die Stabilität der ersten Schicht zu erhöhen. Dabei überlappt also entweder das vierte Material und/oder das sechste Material die erste Verbindungsstrecke. Besonders bevorzugt wird die Verbindungsstrecke vom vierten und dem sechsten Material überlappt, da das vierte und das sechste Material die guten magnetischen Eigenschaften aufweisen und die Diffusion der Materialkomponenten des vierten und des sechsten Materials in das erste Material dessen Eigenschaften weniger sensibel beeinflussen, als die Diffusion des dritten und des fünften Materials in das zweite Material. Das zweite Material, das die hohen Permeabilitätszahl, insbesondere von mehr als 50 aufweist, ist in seinen Materialeigenschaften sensibler gegenüber möglichen Diffusionsprozessen aus den Materialien der zweiten und dritten Schicht als das erste Material. Daher ist es zweckmäßiger, das Material mit den besseren Magneteigenschaften, also dem vierten und dem sechsten Material über die erste Verbindungsstrecke der ersten Schicht überlappen zu lassen.

Die Permeabilitätszahl des dritten und des fünften Materials sowie des ersten Materials, also das Material, das eine hohe Festigkeit bereitstellen soll, ist im Gegensatz zu dem zweiten, vierten und sechsten Material kleiner, insbesondere kleiner als 5. Im Gegenzug weist das erste, das dritte und das fünfte Material dafür eine sehr hohe Zugfestigkeit auf, insbesondere eine hohe Zugfestigkeit, die mehr als 800 MPa aufweist, oder die bevorzugt mehr als 1.000 MPa aufweist.

Grundsätzlich können das erste, das dritte und das fünfte Material dieselbe Zusammensetzung aufweisen. Sie gehen dann auch auf dasselbe Ausgangsmaterial für das Siebdruckverfahren zurück. Das Gleiche gilt für das zweite, das vierte und das sechste Material, die ebenfalls dieselben Materialeigenschaften aufweisen können. Um einen Gradienten über die erste, die zweite und die dritte Schicht bezüglich der Materialeigenschaften zu erzeugen, kann es jedoch zweckmäßig sein, dass sich die Materialeigenschaften des ersten, dritten und fünften Materials sowie des zweiten, vierten und sechsten Materials leicht unterscheiden und gradientenförmig verändern.

In einer weiteren Ausgestaltungform der Erfindung ist die Materiallage im Wesentlichen rotationssymmetrisch aufgebaut und somit zur Anwendung in einem Rotor für eine elektrische Maschine geeignet.

Die hier verwendeten Fachbegriffe seien wie folgt definiert. Die Materiallage entspricht funktional einem Blech in einem herkömmlichen Blechpaket beispielsweise eines Rotors oder eines Stators einer elektrischen Maschine, beispielsweise eines Elektromotors oder eines Generators. Da sich der Materialaufbau und das Herstellungsverfahren von einem herkömmlichen Blech unterscheidet, wird anstatt von einem Blech von Materiallage gesprochen. Statt von einem Blechpaket wird hier in analoger Weise von einem Materialstapel gesprochen, der in funktionaler Weise mit verbesserten Eigenschaften einem herkömmlichen Blechpaket entspricht.

Bei der Materiallage handelt es sich um ein flächiges Gebilde, das in einer x-y-Ebene eines Koordinatensystems eine wesentlich größere Ausbreitung aufweist als in eine z-Richtung. Daher wird unter dem Begriff flächige Ausbreitung eine Erstreckung der Materiallage in der x-y-Ebene verstanden. Dabei entstehen an den Enden der Ausbreitung des ersten Materials Stirnflächen, die im Idealfall senkrecht zur x-y-Ebene, also in z-Richtung, verlaufen. In der Praxis verlaufen die Stirnflächen aufgrund von Benetzungseffekten und Oberflächeneffekten im Allgemeinen nicht senkrecht, weisen aber dennoch eine wesentliche Komponente in z-Richtung auf. Das erste Material und das zweite Material grenzen an ihren jeweiligen Stirnflächen aneinander und sind dort stoffschlüssig miteinander verbunden. Der Verlauf der Stirnflächen, an denen die beiden Materialen verbunden sind, wird aus z-Richtung betrachtet als Verbindungsstrecke bezeichnet. Ebenfalls aus z-Richtung betrachtet erstreckt sich dann die Flächenseite der ersten Schicht in der x-y-Ebene, wobei die Flächenseite in ihrer Ausbreitung wesentlich größer ist als die Stirnfläche. Unter stoffschlüssig werden hierbei Verbindungen verstanden, bei denen die Verbindungspartner durch atomare oder molekulare Kräfte zusammengehalten werden. Sie sind gleichzeitig nicht lösbare Verbindungen, die sich nur durch Zerstörung der Verbindung trennen lassen. Stoffschlüssige Verbindungen lassen sich beispielsweise durch Diffusionsprozesse, Sinterprozesse oder durch chemische Reaktionen erzielen.

Die Permeabilität µ wird durch den Quotienten aus dem magnetischen Fluss B und dem magnetischen Feld H bestimmt. Die Permeabilitätszahl µ_{τ} wiederum ergibt sich aus dem Verhältnis der gemessenen Permeabilität µ und der Vakuumpermeabilität µ₀. Demnach ist µ_{τ} eine dimensionslose Größe.

Ein weiterer Bestandteil der Erfindung ist ein Materiallagenstapel für eine elektrische Maschine umfassend eine Mehrzahl von aufeinander gestapelten Materiallagen nach einem der Ansprüche 1 bis 10. Ein derartiger Materialstapel entspricht einem bereits erwähnten Blechpaket für den Rotor oder auch für den Stator einer elektrischen Maschine, wie beispielsweise einem Elektromotor oder einem Generator. Entsprechend ist auch eine elektrische Maschine Teil der Erfindung, die einen Materialstapel nach Anspruch 11 als Teil eines Stators oder eines Rotors umfasst.

Ein weiterer Bestandteil der Erfindung ist ein Verfahren zur Herstellung einer Materiallage, wobei mittels eines Siebdruckverfahrens zunächst ein Komposit-Grünkörper der Materiallage unter Durchführung folgender Schritte erzeugt wird:
Zunächst wird ein erstes Material auf ein Substrat gedruckt und getrocknet, dabei entsteht ein erster Grünkörper. Darauf erfolgt das Drucken und Trocknen eines zweiten Materials auf dem Substrat, sodass eine von dem ersten Grünkörper freie Fläche des Substrats bedeckt wird und der erste Grünkörper mit dem zweiten Grünkörper entlang einer ersten Verbindungsstrecke sich berührend aneinander liegen, sodass eine erste Schicht entsteht. Darauf erfolgt das Drucken eines dritten Grünkörpers eines dritten Materials auf den ersten Grünkörper der ersten Schicht. Ferner erfolgt das Drucken eines vierten Grünkörpers eines vierten Materials auf die erste Schicht, sodass eine zweite Schicht mit einer zweiten Verbindungsstrecke zwischen dritten Grünkörper und vierten Grünkörper gebildet wird. Dabei wird der Bereich des dritten Grünkörpers oder der Bereich des vierten Grünkörpers so angeordnet, dass die erste Verbindungsstrecke zumindest teilweise überlappt wird. Anschließend erfolgt ein Wärmbehandlungsprozess des so dargestellten Komposit- Grünkörpers.

Die Vorteile des erfindungsgemäßen Verfahrens sind bereits bezüglich der Materiallage gemäß Patentanspruch 1 erläutert. Insbesondere werden die Handling-Eigenschaften während der Produktion verbessert, zudem weist auch die Materiallage an sich durch das Mehrschichtverfahren und der Überlappung der Verbindung in der ersten Schicht eine höhere Festigkeit auf.

In einer weiteren Ausgestaltungsform der Erfindung überlappt der Bereich des vierten Grünkörpers die erste Verbindungsstrecke zumindest teilweise und das aus dem vierten Grünkörper gebildete vierte Material weist dabei eine Permeabilitätszahl µ_{τ} auf, die größer als 50 ist. Auch diese Vorteile durch die lokal designten Werkstoffeigenschaften sind bereits bezüglich der Materiallage beschrieben. Die Materialeigenschaften werden bereits in dem Grünkörpermaterial, aus dem durch Wärmebehandlung das eigentliche Material wird, vorweggenommen.

Unter einem Siebdruckverfahren wird ein Verfahren verstanden, in dem eine viskose Paste (Siebdruckpaste) mittels eines Rakels oder eines vergleichbaren festen Hilfsmittels durch ein engmaschiges Sieb gepresst wird, so dass auf einem Substrat eine Schicht aus der Paste haften bleibt. Das Sieb kann mit einer Schablone versehen sein, so dass auf dem Substrat eine negative Abbildung der Schablone entsteht. Die verwendete Paste enthält dabei den Grundstoff des zu erzeugenden Materials. Wenn die Paste auf dem Substrat aufgebracht und getrocknet ist, spricht man von einem Grünzustand. Im Trocknungsprozess werden dabei insbesondere Lösungsmittel aus der Pastenschicht entfernt, um diese handhabbar zu machen. Der Grünkörper ist bevorzugt vom Substrat lösbar ausgestaltet. Sind, wie hier beschrieben, mehrere Grünkörper mit unterschiedlichen Materialzusammensetzungen aneinandergesetzt und/oder in mehreren Schichten übereinander gelagert, so spricht man von einem Komposit-Grünkörper. Das Substrat hat bevorzugt eine sehr glatte Oberfläche, als Substratmaterial eignen sich Glas, Metall, Keramik, Kunststoffe oder Verbundwerkstoffe. Der Wärmebehandlungsprozess kann dabei mehrere Schritte auch bei mehreren Temperaturen und Atmosphären unter Anwendung verschiedener Prozessdrücke enthalten. Insbesondere kommt es dabei zu Sinterprozessen, beispielsweise in Form von Diffusionsprozessen, wodurch Material des Grünkörpers in das endgültige funktionale Material überführt wird.

Ein weiterer Bestandteil der Erfindung ist ein Verfahren, wonach vor dem Wärmebehandlungsprozess des Komposit- Grünkörpers dieser vom Substrat gelöst und gedreht wird, sodass die zweite Schicht auf dem Substrat aufliegt und auf der ersten Schicht eine dritte Schicht mit dem fünften Grünkörper eines fünften Materials und einem sechsten Grünkörper eines sechsten Materials analog zur zweiten Schicht aufgedruckt wird. Auch die Vorteile der dritten Schicht, die darin bestehen, eine weitere Verfestigung und eine Verbesserung der Handhabbarkeit während des Prozesses zu gewährleisten, ist bereits bezüglich der ersten Materiallage erläutert.

Weitere Ausgestaltungsformen und weitere Vorteile der Erfindung werden anhand der folgenden Figuren näher erläutert. Dabei handelt es sich um reine schematische Ausgestaltungsformen, die keine Einschränkung des Schutzbereiches darstellen.

### Dabei zeigen

Figur 1 eine Draufaufsicht auf eine Materiallage in der XY-Ebene mit zwei verschiedenen Materialien in der XY-Ebene,
Figur 2 einen Querschnitt durch die Materiallage aus Figur 1 in YZ-Ebene,
Figur 3 eine dreidimensionale Darstellung in schematischer Form der Materiallage,
Figur 4 eine Draufsicht auf unterschiedlich ausgestaltete Materiallagen mit unterschiedlichen Verbindungsstrecken,
Figur 5 eine schematische Querschnittsdarstellung eines Materiallagenstapels als Teil eines Rotors für eine elektrische Maschine,
Figur 6 einen schematischen Ablauf des Herstellungsverfahrens der Materiallage.

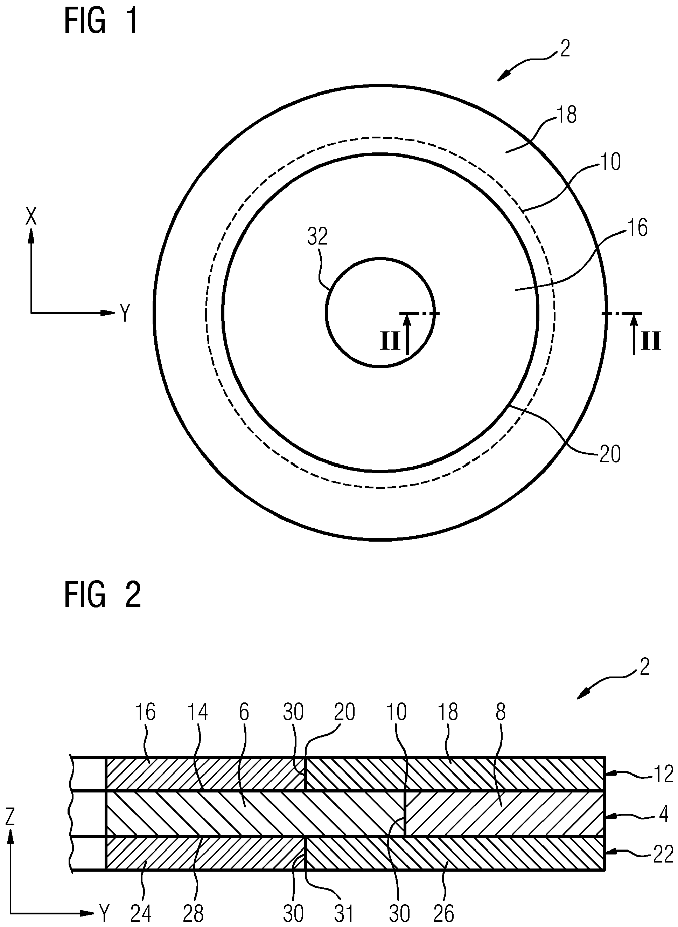

In Figur 1 ist eine Draufaufsicht auf eine Materiallage 2 gezeigt, die in der flächigen Ausbreitung in xy-Richtung dargestellt ist. Die in Figur 1 eingezeichnete Strecke II ist in Figur 2 als Querschnittsdarstellung schematisch wiedergegeben. Dabei weist die Materiallage 2 in ihrem Querschnitt eine erste Schicht 4 in der Mitte auf, die in der Darstellung gemäß Figur 2 von oben und von unten jeweils von einer zweiten Schicht 12 und einer dritten Schicht 22 zumindest teilweise bedeckt ist. Die erste Schicht 4 weist dabei ein erstes Material 6 sowie ein zweites Material 8 auf. Die zweite Schicht 12, die in der Darstellung gemäß Figur 2 oberhalb der ersten Schicht 4 angeordnet ist, weist ein drittes Material 16 sowie ein viertes Material 18 auf. Die dritte Schicht 22, die unterhalb der ersten Schicht 4 angeordnet ist, weist ein fünftes Material 24 sowie ein sechstes Material 26 auf. Die zweite Schicht 12 ist dabei auf einer Flächenseite 14 der ersten Schicht aufgebracht und die dritte Schicht 22 auf einer weiteren Flächenseite 28 der ersten Schicht 4.

Die einzelnen Materialien 6, 8, 16, 18, 24, 26 weisen dabei unterschiedliche Materialeigenschaften auf. Diese betreffen zum einen insbesondere die Zugfestigkeiten und zum anderen die Permeabilitätszahl. Das erste Material 6 weist dabei eine relativ hohe Zugfestigkeit auf, die bevorzugt über 800 MPa, besonders bevorzugt über 1.200 MPa liegt. Auch Materialien mit einer Zugfestigkeit von 1.500 MPa und bis zu 4.000 MPa sind zweckmäßig und darstellbar. Im Gegensatz dazu weist das zweite Material 8 besonders gute magnetische Eigenschaften auf. So weist das zweite Material 8 eine Permeabilitätszahl µᵣ auf, die bevorzugt über 50, besonders bevorzugt mehr als 100 beträgt.

Die zweite Schicht 12 sowie die dritte Schicht 22 weisen mit dem jeweiligen dritten Material 16 sowie dem vierten Material 18 und mit dem fünften Material 24 bzw. sechsten Material 26 analoge Werkstoffeigenschaften auf, die bereits zum ersten und zum zweiten Material beschrieben sind. Dabei weisen die Materialien, die rotatorisch innenliegend sind, also das dritte Material 16 und das fünfte Material 24 analog dem ersten Material 6 bevorzugt eine hohe Festigkeit auf und die rotatorisch außenliegenden Materialien, also das vierte Material 18 bzw. das sechste Material 26 weisen analog dem zweiten Material 8 gute magnetische Eigenschaften auf. Es kann auch zweckmäßig sein, dass das erste Material 6, das dritte Material 16 und das fünfte Material 24 auf derselben Basis ausgestaltet sind. Das Gleiche gilt für das zweite Material 8, das vierte Material 18 und das sechste Material 26. Je nach Bauart können jedoch auch graduelle Unterschiede in den Materialeigenschaften eingestellt sein.

Das erste Material 6 sowie das zweite Material 8 liegen, wie bereits gemäß Figur 1 beschrieben, in der XY-Ebene verbunden an Stirnflächen 30 aneinander. Die Stirnflächen 30 sind in der Figur 2 bezüglich zur XY-Ebene (Figur 1) bzw. bezüglich zur Y-Ausrichtung in Z-Richtung senkrecht dargestellt. Das ist eine deutliche Vereinfachung, in der Praxis wird eine derartige senkrechte Gestaltung der Stirnflächen 30 nicht möglich sein. Ein gewisser Winkel bzw. auch gewisse kurvenförmige Verläufe der Stirnfläche 30 sind in der Praxis real. Überträgt man die Stirnflächen 30 auf die Darstellung in der XY-Ebene gemäß Figur 1, so bilden sich aus den Stirnflächen 30 Verbindungsstrecken, nämlich eine erste Verbindungsstrecke 10 in der ersten Schicht 4 sowie eine Verbindungsstrecke 20 in der zweiten Schicht 12 und eine dritte Verbindungsstrecke 31 in der dritten Schicht 22.

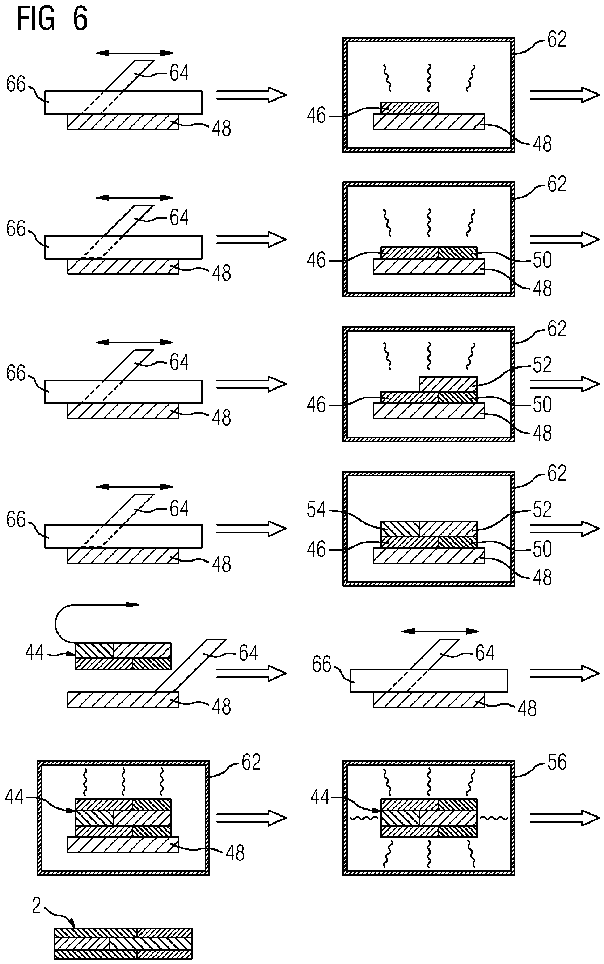

Die Verbindungsstrecken 10 und 20 sind dabei in der Figur 1 besser in der XY-Ebene zu erkennen. So ist die erste Verbindungsstrecke 10, die in der ersten Schicht 4 liegt und von der zweiten Schicht 12 überlagert wird, gestrichelt dargestellt. Die zweite Verbindungsstrecke 20 stellt dabei die Trennung in der zweiten Schicht 12 zwischen dem dritten Material 16 und dem vierten Material 18 dar. Die Materiallage 2 ist dabei bevorzugt im Wesentlichen rotationssymmetrisch ausgestaltet und weist eine Bohrung 32 auf, auf die noch in Bezug auf Figur 6 eingegangen werden wird.

Die erste Verbindungsstrecke 10 trennt somit entlang der Stirnfläche 30 das erste Material 6 und das zweite Material 8. Zur Steigerung der Stabilität der Materiallage 2 ist die zweite Schicht 12 sowie die dritte Schicht 22 vorgesehen. In ihren Materialkombinationen weisen die zweite Schicht 12 und die dritte Schicht 22 wie bereits erwähnt ähnliche Eigenschaften auf wie die erste Schicht 4, sodass jeweils ein ähnliches Material, was die Zugfestigkeit bzw. die magnetischen Eigenschaften angeht, das Material der ersten Schicht 4 überlagert. Lediglich im Grenzbereich, also im Bereich der Verbindungsstrecke 10 überlappt in dieser Ausgestaltungsform gemäß Figur 2 und Figur 1 in der zweiten Schicht 12 das vierte Material 18 die erste Verbindungsstrecke 10. Das vierte Material 18 weist dabei ähnliche magnetische Eigenschaften auf wie das zweite Material 8. Dieses vierte Material 18 bedeckt aber die Verbindungsstrecke 10 entlang der Stirnfläche 30 der ersten Schicht 4 und stabilisiert somit diese Verbindung zwischen dem ersten Material 6 und dem zweiten Material 8.

Die gleiche Wirkung weist die dritte Schicht 22 mit dem sechsten Material 26 auf, das von der gegenüberliegenden, zweiten Flächenseite 28 der ersten Schicht 4 die erste Verbindungsstrecke überlappt. Dabei ist es zweckmäßig, dass das magnetisch ausgebildete Material, also das vierte Material 18 bzw. das sechste Material 26 die erste Verbindungsstrecke 10 so überlappt, dass das magnetische Material mit dem ersten Material 6 an den Flächenseiten 14 und 28 aneinander liegt. Sollte es während eines Wärmebehandlungsprozesses, beispielsweise eines Sinterprozesses, auf den noch näher eingegangen wird, zu Diffusionsprozessen von dem sechsten Material 26 bzw. dem vierten Material 18 in das erste Material 6 kommen, so werden dessen gute mechanische Eigenschaften in den meisten Fällen weniger negativ beeinflusst als wenn Diffusionsprozesse zwischen dem dritten Material 16 bzw. dem fünften Material 24 und dem zweiten Material 8 auftreten würden. Das liegt daran, dass Materialien mit sehr hohen magnetischen Eigenschaften gegenüber Legierungsveränderungen, die durch Diffusionsprozesse auftreten, sensibler reagieren.

Grundsätzlich ist anzumerken, dass an allen Grenzflächen, also zum einen an den Stirnflächen 30 sowie an der Flächenseite 14 und an der Flächenseite 28 hier nicht dargestellte Diffusions-Sperrschichten und/oder Haftvermittlungsschichten aufgetragen sind oder sein können.

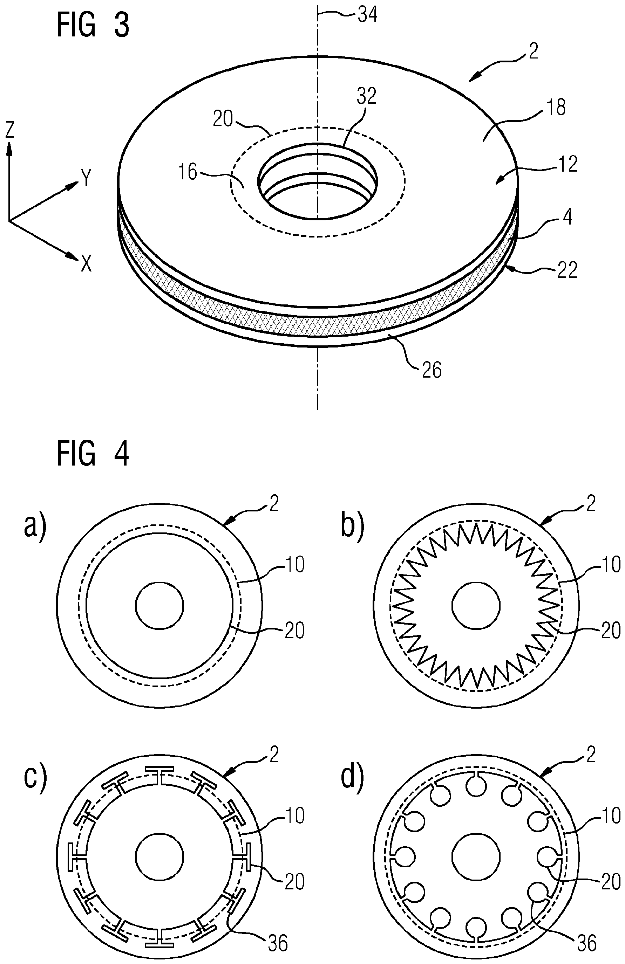

In Figur 3 ist noch analog zu den Figuren 1 und 2 eine dreidimensionale Darstellung einer ähnlichen Materiallage 2 gegeben, in der das Koordinatensystem X, Y, Z dreidimensional eingetragen ist. Die Darstellung gemäß Figur 3 dient zur besseren Visualisierung der Darstellung gemäß Figuren 1 und 2 und sie enthält dabei die bereits bezüglich dieser Figuren erläuterten Merkmale.

In Figur 4 sind noch weitere Ausgestaltungsformen der Materiallage 2 hinsichtlich der Form der Verbindungsstrecken 10 und 20 angegeben. In der Figur 4a ist die analoge Darstellung zur Figur 1 gezeigt. Die Figuren 4b, 4c und 4d wiederum unterscheiden sich in der Anordnung der Verbindungsstrecken 10 und 20 zueinander. Die Teilfiguren 4b, 4c, und 4d weisen dabei besondere Verläufe der Verbindungsstrecke 20 auf, wobei in Figur 4b ein sternförmiger Verlauf der Verbindungsstrecke 20 insbesondere rotatorische Scherkräfte auf die erste Schicht 4 besser abfangen kann, als dies bei der Figur 4a der Fall ist. Die Figuren 4c und 4d zeigen Hinterschneidungen der Verbindungsstrecke 20 gegenüber der

Verbindungsstrecke 10, die insbesondere geeignet sind, Zentrifugal- bzw. Zentripedalkräften, die auf die Materiallage 2 wirken, besser entgegenzuwirken.

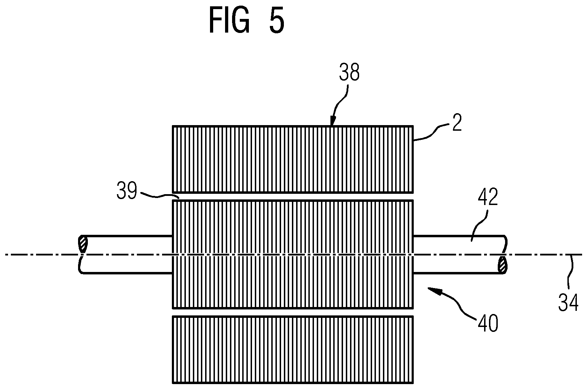

In Figur 5 ist ein Materiallagenstapel 38 dargestellt, der auf einer Welle 42 angeordnet ist, die durch die jeweiligen Bohrungen 32 der Materiallagen 2 hindurch verläuft und entlang einer Drehachse 34 rotatorisch bewegbar ist. Dabei weist der Materiallagenstapel 38 bzw. die jeweils verbaute Materiallage 2 im Einzelnen Nuten 39 auf, die in den vorangegangenen Figuren nicht erläutert wurden. Diese Nuten 39 dienen zur Anordnung von Wicklungen eines elektrischen Leiters. Der Materiallagenstapel 38 stellt damit die Basis eines Rotors 40 einer elektrischen Maschine wie beispielsweise eines Elektromotors oder eines Generators dar. Üblicherweise wird ein derartiger Materiallagenstapel durch die Stapelung von einzelnen Elektroblechen, die aus einem großen Blech ausgestanzt sind, aufgebaut. Der Unterschied zu einem herkömmlichen Blechpaket besteht zum einen darin, dass die verwendeten Materiallagen deutlich dünner herstellbar sind als herkömmlich gestanzte Bleche. Die Materiallage weist dabei bevorzugt eine Dicke zwischen 50 µm und 200 µm auf. Durch dünnere Bleche werden Wirbelstromverluste reduziert, sodass eine geringere Erwärmung des Materiallagenstapels gegenüber einem herkömmlichen Blechpaket auftritt. Das führt wiederum dazu, dass derartig hergestellte Rotoren 40 eine höhere Drehzahl aufweisen können, bis die für die elektrische Maschine begrenzende Temperatur erreicht ist. Die elektrische Maschine kann somit mit einer höheren Drehzahl und somit auch mit einer höheren Leistung gefahren werden. Damit den bei höheren Drehzahlen anfallenden mechanischen Belastungen auf die relativ dünnen Materiallagen standgehalten werden kann, kommt das bereits beschriebene lokale Werkstoffdesign zum Tragen. Insbesondere das erste Material 6 der ersten Schicht 4 weist die beschriebene hohe Zugfestigkeit auf, sodass auch hohe Zentrifugalkräfte, die bei hohen Drehgeschwindigkeiten auf die Materiallage 2 bzw. auf den Materiallagenstapel 38 wirken, ertragen werden können. Durch die Komposit-Darstellung der Materiallage 2 mit einerseits einem Material hoher Festigkeit und einem Material mit sehr guten magnetischen Eigenschaften kann somit den durch die hohen Drehzahlen entstehenden hohen Zugkräften entgegengewirkt werden. Gleichzeitig können die magnetischen Eigenschaften durch eine gezielte Auswahl des zweiten Materials 8 gegenüber herkömmlichen Blechmaterialien verbessert werden.

Im Weiteren wird anhand der Figur 6 ein Herstellungsprozess für die Materiallage 2 schematisch erläutert. Hierbei handelt es sich um eine mögliche Darstellung des Prozesses, wobei die Materiallage auch durch andere Prozessschritte herstellbar ist. Insbesondere erhebt die Verfahrensbeschreibung gemäß Figur 6 keinen Anspruch auf Vollständigkeit. Beispielsweise können auch zusätzliche Verfahrensschritte eingebracht werden, wie beispielsweise das Aufbringen von Diffusionssperrschichten oder Haftvermittlungsschichten. Auf die Erläuterung dieser Verfahrensschritte wird der Einfachheit halber verzichtet.

Zunächst wird in einem ersten Schritt, wie dies in Figur 6 links oben dargestellt ist, mittels eines Siebdruckverfahrens, das hier ebenfalls sehr schematisch dargestellt ist und lediglich durch ein Rakel 64, dessen Bewegungsrichtung in zwei Pfeilrichtungen angedeutet ist, und durch ein Sieb 66 veranschaulicht ist. Dabei wird mittels des Siebdruckverfahrens das Rakel 64 entlang des dargestellten Doppelpfeils bewegt, wobei eine hier nicht dargestellte Paste durch das Sieb 66 gepresst wird. Die Paste umfasst dabei in der Siebdrucktechnik übliche wässrige oder organische Lösungsmittel sowie Bindemittel, insbesondere organische Bindemittel, die in weiteren Prozessschritten wieder zersetzt oder verdampft werden. Ferner umfasst die Paste funktionale Bestandteile, insbesondere metallische Pulver, die nach einem noch zu beschreibenden Sinterungsprozess entsprechende Materialeigenschaften aufweisen. Wenn die hier nicht dargestellte Paste auf ein Substrat 48 mittels des Rakels 64 durch das Sieb 66 gepresst und anschliessend getrocknet wurde, entsteht auf der Oberfläche des Substrats 48 ein Grünkörper. Das Sieb 66 weist dabei bevorzugt verschiedene Schablonen auf, sodass die Paste durch das Rakel 64 nur dort aufgebracht wird, wo das Sieb 66 aufgrund der Schablone, die hier nicht dargestellt ist, durchlässig ist.

In den obersten beiden Darstellungen der Figur 6 wird zunächst eine Pastenschicht 46 eines ersten Materials 6 hergestellt. Diese wird bevorzugt einem Trocknungsprozess 62 unterzogen, damit die besagten Lösungsmittel aus der Paste ausdampfen können. Im weiteren Schritt in der zweiten Zeile der Figur 6 wird nun durch ein zweites Sieb 66 eine zweite Paste aufgetragen, die den Grundstoff für das zweite Material 8 enthält. Es entsteht somit eine zweite Pastenschicht 50 des zweiten Materials 8. Auch diese Pastenschicht 50 wird wieder einem Trocknungsprozess 62 zugeführt. Im Weiteren wird entsprechend der dritten Zeile der Figur 6 auf die so entstandene erste Schicht, die der ersten Schicht 4 der Materiallage 2 im endgültigen Zustand entspricht, eine Pastenschicht 52 des vierten Materials 18 aufgebracht. Es folgt ein Trocknungsschritt 62 und ein weiteres Aufbringen einer vierten Pastenschicht 54 des dritten Materials 16. Als nächstes ist es zweckmäßig, den so entstandenen Grünkörper-Verbund, der auch als Komposit-Grünkörper 44 bezeichnet werden kann, vom Substrat 48 zu lösen und zu drehen. Es erfolgt nun in analoger Weise zur zweiten Schicht 12 das Aufbringen der dritten Schicht 22, wobei ein fünfter Grünkörper 58 als Vorläufer eines fünften Materials sowie ein sechster Grünkörper 60 als Vorläufer eines sechsten Materials 26 auf die erste Schicht 4 aufgebracht wird. Das so entstandene Objekt wird als Komposit-Grünkörper 44 bezeichnet. Gegebenenfalls erfolgt ein weiterer Trocknungsprozess 62 und ein anschließender Wärmebehandlungsprozess 56. Hierbei werden Temperaturen eingesetzt, die zu einem Sinterprozess des Komposit-Grünkörpers 44 führen. Die Temperaturen betragen dabei zwischen 800°C und 1350°C, wobei es zwischen den einzelnen Partikeln, die in dem Grünkörper vorliegen, zu Diffusionsprozessen und Sinterhalsbildungen sowie zu Kornwachstumsprozessen kommt. Nach dem Wärmebehandlungsprozess 56 spricht man nicht mehr von dem Komposit-Grünkörper 44, sondern von der Materiallage 2. Diese kann gegebenenfalls noch nachbearbeitet werden bzw. mit Beschichtungen versehen werden, beispielsweise sind elektrisch isolierende Beschichtungen zweckmäßig. Anschließend erfolgt das Zusammensetzen mehrerer Materiallagen 2 zu dem bereits bezüglich Figur 5 beschriebenen Materiallagenstapel 38 und zum Zusammenbau des Rotors 40.

### Bezugszeichenliste

- 2: Materiallage
- 4: erste Schicht
- 6: erstes Material
- 8: zweites Material
- 10: erste Verbindungsstrecke
- 12: zweite Schicht
- 14: Flächenseite
- 16: drittes Material
- 18: viertes Material
- 20: zweite Verbindungsstrecke
- 22: dritte Schicht
- 24: fünftes Material
- 26: sechstes Material
- 28: zweite Flächenseite
- 30: Stirnfläche
- 31: dritte Verbindungsstrecke
- 32: Bohrung
- 34: Drehachse
- 36: Hinterschneidungen
- 38: Materiallagenstapel
- 39: Nuten
- 40: Rotor
- 42: Welle
- 44: Komposit-Grünkörper
- 46: Grünkörper 1. Material
- 48: Substrat
- 50: Grünkörper 2. Material
- 52: dritter Grünkörper
- 54: vierter Grünkörper
- 56: Wärmebehandlungsprozess
- 58: fünfter Grünkörper
- 60: sechster Grünkörper
- 62: Trocknungsschritt
- 64: Rakel
- 66: Sieb

## Patentansprüche

1. Materiallage für eine elektrische Maschine, wobei die Materiallage (2) eine erste Schicht (4) aufweist, die in einer flächigen Ausbreitung ein erstes Material (6) aufweist, an das entlang der flächigen Ausbreitung ein zweites Material (8) angrenzt, wobei die beiden Materialien (6, 8) stoffschlüssig miteinander entlang einer ersten Verbindungsstrecke (10) verbunden sind und das erste Material (6) gegenüber dem zweiten Material (8) eine niedrigere Permeabilitätszahl µ_{τ} aufweist **dadurch gekennzeichnet, dass** die Materiallage (2) eine zweite Schicht (12) aufweist, die mit der ersten Schicht (4) stoffschlüssig verbunden ist und diese an einer Flächenseite (14) zumindest teilweise bedeckt und die ebenfalls mindestens zwei Materialien, ein drittes Material (16) und ein viertes Material (18) umfasst, die wiederum entlang einer flächigen Ausbreitung entlang einer zweiten Verbindungsstrecke (20) verbunden sind, wobei der Bereich des dritten Materials (16) oder der Bereich des vierten Materials (18) die erste Verbindungsstrecke (10) zumindest teilweise überlappt.

2. Materiallage nach Anspruch 1, **dadurch gekennzeichnet, dass** das dritte Material (16) eine niedrigere Permeabilitätszahl µ_{τ} aufweist als das vierte Material (18).

3. Materiallage nach einem der Ansprüche 1 oder 2, **dadurch gekennzeichnet, dass** eine dritte Schicht (22) vorgesehen ist, die ein fünftes Material (24) und ein sechstes Material (26) umfasst und die dritte Schicht (22) auf einer der zweiten Schicht (12) gegenüberliegenden Flächenseite (28) auf der ersten Schicht (4) in analoger Weise zur zweiten Schicht (12) angeordnet ist.

4. Materiallage nach einem der Ansprüche 1 bis 3, **dadurch gekennzeichnet, dass** das vierte Material (18) und/oder das sechste Material (26) die erste Verbindungsstrecke (10) überlappt.

5. Materiallage nach einem der Ansprüche 1 bis 4, **dadurch gekennzeichnet, dass** das zweite Material (8), das vierte Material (18) und das sechste Material (26) eine Permeabilitätszahl µ_{τ} aufweist, die größer als 50 ist.

6. Materiallage nach einem der vorhergehenden Ansprüche, **dadurch gekennzeichnet, dass** das erste Material (6), das dritte Material (16) und das fünfte Material (24) eine Permeabilitätszahl µ_{τ} aufweist, die kleiner als 5 ist.

7. Materiallage nach einem der vorhergehenden Ansprüche, **dadurch gekennzeichnet, dass** das erste Material (6), das dritte Material (16) und das fünfte Material (24) eine Zugfestigkeit aufweisen, die mehr als 800 MPa, bevorzugt mehr als 1000 MPa aufweist.

8. Materiallage nach einem der Ansprüche 3 bis 7, **dadurch gekennzeichnet, dass** das vierte Material (18) und das sechste Material (26) das gleiche Material sind und sich in der Permeabilitätszahl von dem zweiten Material (8) unterscheiden.

9. Materiallage nach einem der vorhergehenden Ansprüche, **dadurch gekennzeichnet, dass** die Materiallage (2) im Wesentlichen rotationssymmetrisch ausgestaltet ist.

10. Materiallage nach einem der vorhergehenden Ansprüche, **dadurch gekennzeichnet, dass** die zweite Verbindungsstrecke (20) in der Art verläuft, dass sie in der flächigen Ausbreitung zwischen dem dritten Material (16) und dem vierten Material (18) Hinterschneidungen (36) bildet.

11. Materiallagenstapel für eine elektrische Maschine, umfassend eine Mehrzahl von aufeinander gestapelten Materiallagen (2) nach einem der Ansprüche 1 bis 10.

12. Elektrische Maschine umfassend einen Materiallagenstapel nach Anspruch 11 als Teil eines Stators oder Rotors (40).

13. Verfahren zur Herstellung einer Materiallage (2), wobei mittels eines Siebdruckverfahrens ein Komposit-Grünkörper (44) der Materiallage unter Durchführung folgender Schritte erzeugt wird,
- Drucken eines ersten Grünkörpers (46) eines ersten Materials (6) auf ein Substrat (48),
- Drucken eines zweiten Grünkörpers (50) eines zweiten Materials (8) auf das Substrat (48); sodass eine von dem ersten Grünkörper (46) freie Fläche des Substrat (48) bedruckt wird und der erste Grünkörper (46) mit dem zweiten Grünkörper (50) entlang einer ersten Verbindungsstrecke (10) sich berührend aneinander liegt, sodass eine erste Schicht (4) entsteht,
- Drucken eines dritten Grünkörpers (52) eines dritten Materials (16) auf den ersten Grünkörper (46) und Teile des zweiten Grünkörpers (50) der ersten Schicht (4),
- Drucken eines vierten Grünkörpers (54) eines vierten Materials (18) auf die erste Schicht (4), sodass eine zweite Schicht (12) mit einer zweiten Verbindungsstrecke (20) zwischen dem dritten Grünkörper (52) und dem vierten Grünkörper (54) gebildet wird, wobei der Bereich des dritten Grünkörpers oder der Bereich des vierten Grünkörpers die erste Verbindungsstrecke (10) zumindest teilweise überlappt,
- wonach anschließend ein Wärmebehandlungsprozess (56) des so dargestellten Komposit-Grünkörpers (44) erfolgt.

14. Verfahren nach Anspruch 13, **dadurch gekennzeichnet, dass** der Bereich des vierten Grünkörpers (54) die erste Verbindungsstrecke (10) mindestens teilweise überlappt und dass das aus dem vierte Grünkörper gebildete vierte Material (18) eine Permeabilitätszahl µ_{τ} aufweist, die größer als 50 ist.

15. Verfahren nach Anspruch 13, **dadurch gekennzeichnet, dass** vor dem Wärmebehandlungsprozess (56) des Komposit-Grünkörpers (44) dieser von einem Substrat (48) gelöst und gedreht wird, sodass die zweite Schicht (12) auf dem Substrat (48) aufliegt und auf der ersten Schicht (4) eine dritte Schicht (22) mit einem fünften Grünkörper (58) eines fünften Materials (24) und einem sechsten Grünkörper (60) eines sechsten Materials (26) analog zur zweiten Schicht (12) aufgedruckt wird.
